(19) Europäisches Patentamt / European Patent Office / Office européen des brevets

(11) **EP 4 749 265 A1**

(12) **EUROPEAN PATENT APPLICATION**
published in accordance with Art. 153(4) EPC

(43) Date of publication:
**27.05.2026   Bulletin 2026/22**

(21) Application number: **24871962.7**

(22) Date of filing: **17.09.2024**

(51) International Patent Classification (IPC):
**G01N 21/05** (2006.01)      **G01N 21/65** (2006.01)

(52) Cooperative Patent Classification (CPC):
**G01N 21/05; G01N 21/65; G01N 21/85;**
G01N 2021/651; G01N 2201/1296

(86) International application number:
**PCT/JP2024/033103**

(87) International publication number:
**WO 2025/070168 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **29.09.2023   JP 2023170617**

(71) Applicant: FUJIFILM Corporation
Tokyo 106-8620 (JP)

(72) Inventors:
• **NISHI, Takayuki**
  **Ashigarakami-gun, Kanagawa 258-8577 (JP)**
• **HASEGAWA, Masataka**
  **Ashigarakami-gun, Kanagawa 258-8577 (JP)**
• **YAMAMOTO, Takashi**
  **Ashigarakami-gun, Kanagawa 258-8577 (JP)**

(74) Representative: **Hoffmann Eitle**
**Patent- und Rechtsanwälte PartmbB
Arabellastraße 30
81925 München (DE)**

(54)  **PROBE**

(57)     A probe that is mounted on a flow cell having a first flow path through which a fluid including a measurement target substance of physical property data of a spectroscopic analysis apparatus flows, the probe being disposed with a distal end portion protruding into the first flow path, in which the distal end portion has a configuration in which an area of a flow path through which the fluid flows at a portion where the distal end portion protrudes, as viewed in a flow direction of the fluid, is equal to or greater than an area of a flow path at a narrowest portion in the flow path through which the fluid flows on a downstream side of the distal end portion, the narrowest portion being a portion in which an area is narrowed most as viewed in the flow direction of the fluid.

FIG. 7

EP 4 749 265 A1

**Description**

BACKGROUND OF THE INVENTION

1. Field of the Invention

The present disclosed technology relates to a probe.

2. Description of the Related Art

A spectroscopic analysis apparatus includes a probe. An optical system for irradiating a measurement target substance for physical property data with measurement light and taking in return light from the measurement target substance is built in a distal end portion of the probe. As described in JP2020-511635A, a probe (referred to as an optical analysis device connector in JP2020-511635A) is mounted on a flow cell. JP2020-511635A discloses an aspect in which a part of a ball lens as an optical system is disposed in a distal end portion of the probe protrudes into a flow path of a flow cell through which a fluid including a measurement target substance flows.

SUMMARY OF THE INVENTION

As in the aspect described in JP2020-511635A, in a case in which the distal end portion of the probe protrudes into the flow path of the flow cell, a protruding portion is a contracted flow portion where an area of the flow path as viewed in a flow direction of the fluid is narrowed as compared with other portions. Vortices are generated by the contracted flow portion, and there is a concern that the measurement target substance in the fluid is damaged. However, JP2020-511635A does not take measures to limit the damage to the measurement target substance caused by the protruding portion within an acceptable range.

One embodiment according to the disclosed technology provides a probe capable of limiting damage to a measurement target substance to an acceptable range.

The probe according to the present disclosure is a probe that is mounted on a flow cell having a first flow path through which a fluid including a measurement target substance of physical property data of a spectroscopic analysis apparatus flows, the probe being disposed with a distal end portion protruding into the first flow path, in which the distal end portion has a configuration in which an area of a flow path through which the fluid flows at a portion where the distal end portion protrudes, as viewed in a flow direction of the fluid, is equal to or greater than an area of a flow path at a narrowest portion in the flow path through which the fluid flows on a downstream side of the distal end portion, the narrowest portion being a portion in which an area is narrowed most as viewed in the flow direction of the fluid.

It is preferable that an inflow path through which the fluid flows from an outside into the first flow path and an outflow path through which the fluid flows from the first flow path to the outside are connected to the flow cell, and the narrowest portion is present in the outflow path.

It is preferable that a second flow path through which the fluid flows is formed in the distal end portion.

It is preferable that a flow direction of the fluid in the second flow path coincides with a flow direction of the fluid in the first flow path.

It is preferable that the second flow path has an inflow port and an outflow port of the fluid that are surrounded by a wall surface.

It is preferable that the physical property data is Raman spectral data.

It is preferable that the fluid is any of a cell culture solution, a culture supernatant, a purified solution, and a culture medium.

According to the disclosed technology, it is possible to provide a probe capable of limiting damage to a measurement target substance to an acceptable range.

BRIEF DESCRIPTION OF THE DRAWINGS

FIG. 1 is a diagram showing a state in which Raman spectral data of an antibody or the like in a culture supernatant obtained in a cell culture unit is measured by a measurement system.
FIG. 2 is a diagram showing excitation light and Raman scattered light.
FIG. 3 is an exploded perspective view of a flow cell, a probe unit for spectroscopic analysis, and a measurement head.
FIG. 4 is an exploded cross-sectional view of the flow cell, the probe unit for spectroscopic analysis, and the measurement head.
FIG. 5 is a cross-sectional view of the flow cell, the probe unit for spectroscopic analysis, and the measurement head.
FIG. 6 is a diagram showing an optical system built in the measurement head.
FIG. 7 is an explanatory diagram of a size relationship of flow path areas of each portion of the flow cell and a narrowest portion of a second sending-out channel.

DESCRIPTION OF THE PREFERRED EMBODIMENTS

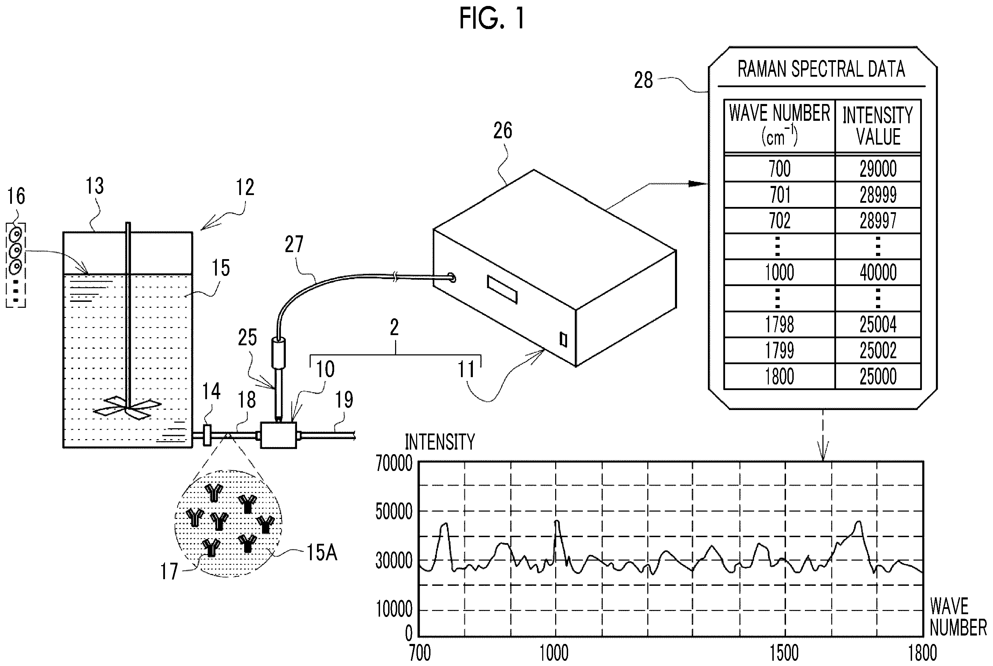

As shown in FIG. 1 as an example, a measurement system 2 comprises a flow cell 10 and a Raman spectrometer 11. The measurement system 2 is incorporated in, for example, a cell culture unit 12 of a system for manufacturing a drug substance of a biopharmaceutical. The cell culture unit 12 includes a culture tank 13 and a cell removal filter 14. A cell culture liquid 15 is stored in the culture tank 13. In addition, the Raman spectrometer 11 is an example of a "spectroscopic analysis apparatus" according to the present disclosed technology.

An antibody-producing cell 16 is seeded in the culture tank 13, and the antibody-producing cell 16 is cultured in the cell culture liquid 15. The antibody-producing cell 16 is, for example, a cell established by incorporating an antibody gene into a host cell such as Chinese hamster ovary cells (CHO cells). The antibody-producing cell 16 produces immunoglobulin, that is, an antibody 17 in a process of culture. For this reason, the antibody 17 is present in the cell culture liquid 15 in addition to the antibody-producing cell 16. The antibody 17 is, for example, a monoclonal antibody, which serves as an active ingredient of the biopharmaceutical. The antibody 17 is an example of a "measurement target substance" according to the disclosed technology.

A first sending-out channel 18 is connected to the culture tank 13. The cell removal filter 14 is disposed in the first sending-out channel 18. The cell removal filter 14 captures the antibody-producing cell 16 contained in the cell culture liquid 15 with a filter membrane (not shown) by using, for example, a tangential flow filtration (TFF) method, and removes the antibody-producing cell 16 from the cell culture liquid 15. Further, the cell removal filter 14 transmits the antibody 17. Therefore, the cell culture liquid 15 mainly containing the antibody 17 flows downstream of the cell removal filter 14 of the first sending-out channel 18. The cell culture liquid 15 from which the antibody-producing cell 16 has been removed by the cell removal filter 14 in this way is called a culture supernatant liquid. Hereinafter, the cell culture liquid 15 from which the antibody-producing cell 16 has been removed by the cell removal filter 14 will be referred to as a culture supernatant liquid 15A. The culture supernatant liquid 15A is an example of "fluid" according to the present disclosed technology. In addition to the antibody 17, the culture supernatant liquid 15A also contains a cell-derived protein, a cell-derived deoxyribonucleic acid (DNA), an aggregate of the antibody 17, a virus, and the like. These cell-derived protein, the cell-derived DNA, the aggregate of the antibody 17, the virus, and the like are also examples of a "measurement target substance" according to the present disclosed technology. It should be noted that the cell removal filter 14 may be an alternating tangential flow filtration (ATF) filter.

The flow cell 10 is connected to the first sending-out channel 18 on the downstream side of the cell removal filter 14. The culture supernatant liquid 15A from the first sending-out channel 18 flows into the flow cell 10 at a preset flow rate. The first sending-out channel 18 is an example of a "flow path" and an "inflow path" according to the disclosed technology. A sending-out pump (not shown) is provided downstream of the cell removal filter 14 in the first sending-out channel 18 (between the cell removal filter 14 and the flow cell 10). The sending-out pump sends out the culture supernatant liquid 15A toward the flow cell 10 at a flow rate of equal to or greater than 200 cc/min, for example, 300 cc/min.

A second sending-out channel 19 is also connected to the flow cell 10. The culture supernatant liquid 15A that has flowed in the flow cell 10 from the first sending-out channel 18 flows out to the second sending-out channel 19. The second sending-out channel 19 is an example of a "flow path" and an "outflow path" according to the disclosed technology. The second sending-out channel 19 is connected to, for example, a purification unit that purifies the antibody 17 from the culture supernatant liquid 15A by using a chromatography device, and sends out the culture supernatant liquid 15A from the flow cell 10 to the purification unit.

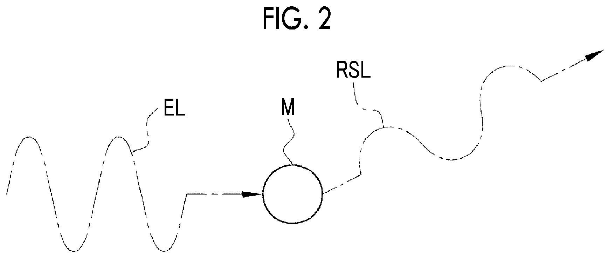

As shown in FIG. 2 as an example, the Raman spectrometer 11 is a device that evaluates a substance M by using the characteristics of Raman scattered light RSL. In a case in which the substance M is irradiated with excitation light EL, the excitation light EL interacts with the substance M to generate the Raman scattered light RSL having a wavelength different from the excitation light EL. A wavelength difference between the excitation light EL and the Raman scattered light RSL corresponds to the energy of the molecular vibration of the substance M. For this reason, it is possible to obtain the Raman scattered light RSL having different wave numbers between the substances M having different molecular structures. It should be noted that it is preferable that the Raman scattered light RSL is a Stokes ray out of the Stokes ray and an anti-Stokes ray.

Returning to FIG. 1, the Raman spectrometer 11 is configured by a measurement head 25 and an analyzer 26. The measurement head 25 is connected to the analyzer 26 via a cable 27. In addition, the measurement head 25 is attached to the flow cell 10. In the following description, the measurement head 25 side will be referred to as "up" or "proximal end", and the flow cell 10 side will be referred to as "down", "bottom", or "distal end".

The analyzer 26 includes a built-in light source that emits the excitation light EL. The excitation light EL emitted from the light source is guided to the measurement head 25 through the cable 27. The measurement head 25 emits the excitation light EL from the distal end. The culture supernatant liquid 15A that flows in the flow cell 10 is irradiated with the excitation light EL. The Raman scattered light RSL is generated by the interaction between the excitation light EL and the antibody 17 or the like in the culture supernatant liquid 15A. The measurement head 25 receives the Raman scattered light RSL. The Raman scattered light RSL received by the measurement head 25 is output to the analyzer 26 through the cable 27.

The analyzer 26 generates Raman spectral data 28 by decomposing the Raman scattered light RSL for each wave number, and deriving an intensity value of the Raman scattered light RSL for each wave number. The Raman spectral data 28 is data in which the intensity value of the Raman scattered light RSL is registered for each wave number. In FIG. 1, the Raman spectral data 28 is data in which intensity values of the Raman scattered light RSL in a range of wave numbers of 700 cm$^{-1}$ to 1800 cm$^{-1}$ are derived in increments of 1 cm$^{-1}$. It should be noted that a graph shown below the Raman spectral data 28 is a graph in which the intensity value of the Raman spectral data 28 is plotted for each wave number and the plotted points are connected with a line. The Raman spectral data 28 is an example of "physical property data" according to the present disclosed technology.

In this way, the measurement system 2 allows the culture supernatant liquid 15A, which is obtained from the culture tank 13 in which the antibody-producing cell 16 is cultured, to flow into the flow cell 10. Then, the culture supernatant liquid 15A flowing into the flow cell 10 is irradiated with the excitation light EL via the measurement head 25, so that the Raman spectral data 28 of the antibody 17 or the like contained in the culture supernatant liquid 15A is measured.

The Raman spectral data 28 is used to predict a state of the measurement target substance, such as a concentration of the antibody 17 in the culture supernatant 15A. In this case, for example, a machine learning model that outputs the concentration of the antibody 17 in response to an input of the Raman spectral data 28 is utilized. A concentration of the aggregate in the culture supernatant 15A may be predicted as the state of the measurement target substance. Instead of or in addition to the concentration, the concentration or the like may be predicted.

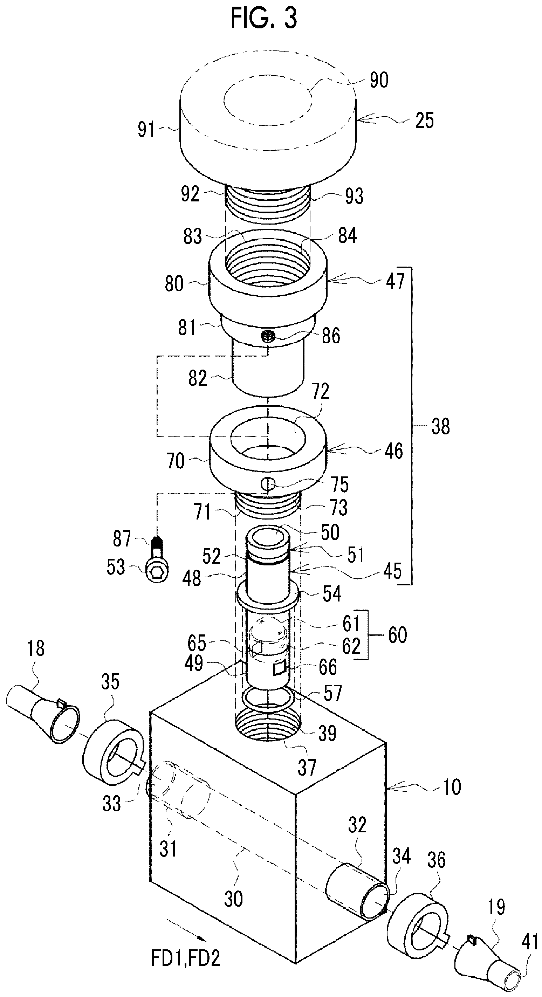

As shown in FIGS. 3, 4, and 5 as an example, the flow cell 10 is a rectangular parallelepiped member having a linear flow path 30 with a circular cross section at the center inside. The flow path 30 is an example of a "flow path" and a "first flow path" according to the disclosed technology. The flow cell 10 is made of, for example, metal such as Hastelloy. Alternatively, the flow cell 10 may be made of, for example, a resin such as a polyolefin-based resin. In a case of being made of a resin, the flow cell 10 may be a single-use type.

A first connection portion 31 and a second connection portion 32 having a cylindrical boss shape are provided at both end surfaces of the flow cell 10 facing each other. The first connection portion 31 has an inflow port 33 of the flow path 30, and the second connection portion 32 has an outflow port 34 of the flow path 30. A direction parallel to the flow path 30 from the inflow port 33 toward the outflow port 34 is a flow direction FD1 of the culture supernatant 15A of the flow path 30. The flow direction FD1 is an example of a "flow direction of a fluid in a first flow path" according to the disclosed technology.

The first sending-out channel 18 and the first connection portion 31 are liquid-tightly connected to each other by a ferrule joint. The ferrule joint is composed of a ferrule (not shown) formed at one end of the first sending-out channel 18 and one end of the first connection portion 31, a gasket (not shown) sandwiched in a groove of the ferrule, and a first clamp 35 that fixes the one end of the first sending-out channel 18 and the one end of the first connection portion 31. Similarly, the second sending-out channel 19 and the second connection portion 32 are liquid-tightly connected to each other by a ferrule joint including a second clamp 36. Parallel screws or tapered screws may be used for the connection between the first sending-out channel 18 and the first connection portion 31 and the connection between the second sending-out channel 19 and the second connection portion 32.

The first sending-out channel 18 has the same diameter from the cell removal filter 14 to one end connected to the first connection portion 31. The one end of the first sending-out channel 18 connected to the first connection portion 31 has an inverse tapered shape in which the diameter gradually increases from an upstream side (cell culture unit 12 side) to a downstream side (flow cell 10 side) in the flow direction FD1. On the contrary, the one end of the second sending-out channel 19 connected to the second connection portion 32 has a tapered shape in which the diameter gradually decreases from the upstream side (flow cell 10 side) to the downstream side (purification unit side) in the flow direction FD1. The second sending-out channel 19 maintains the narrowed diameter to the purification unit. A portion where the diameter is narrowed in the second sending-out channel 19 is a narrowest portion 41 where an area as viewed in the flow direction FD1 is narrowed most in a flow path through which the culture supernatant 15A flows on a downstream side of a distal end portion 49 of a probe 45 described below.

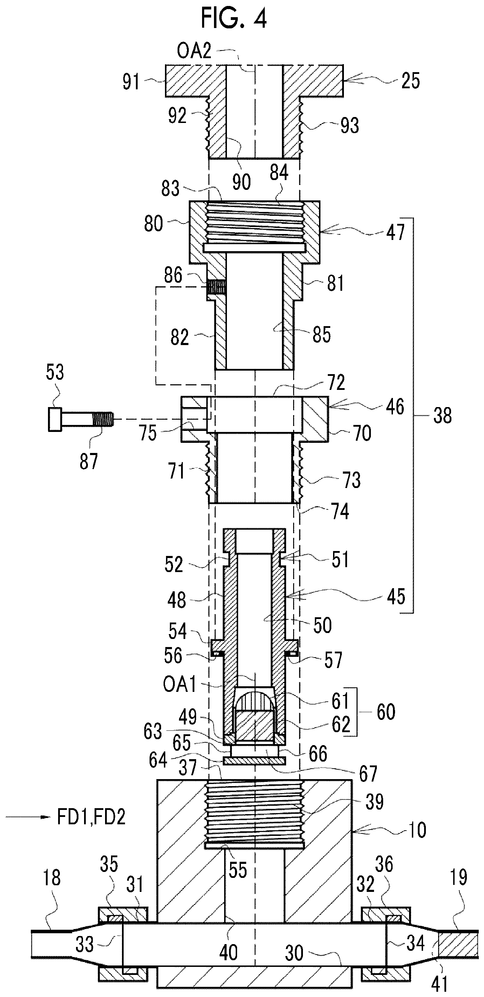

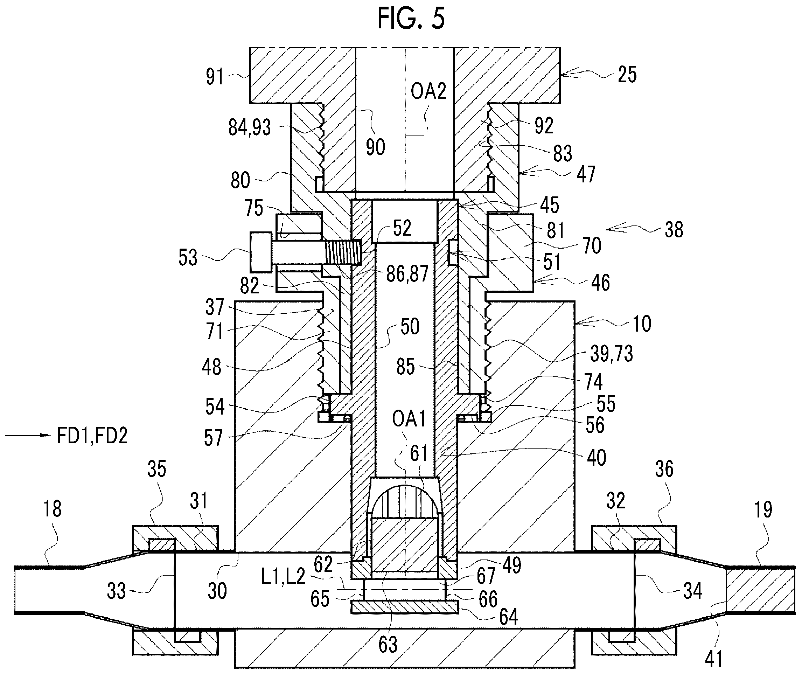

An attachment hole 37 is provided at a center of an upper surface of the flow cell 10. The attachment hole 37 is a circular hole for attachably and detachably attaching a probe unit 38 for spectroscopic analysis (hereinafter, simply referred to as a unit) to the flow cell 10, and a screw 39 is cut on an inner wall surface. The attachment hole 37 is connected to a fitting hole 40 (see FIGS. 4 and 5). The fitting hole 40 is also a circular hole, the center of the fitting hole 37 coincides with the attachment hole 37. The fitting hole 40 has a diameter that is slightly smaller than the attachment hole 37. The fitting hole 40 penetrates the flow path 30.

The unit 38 is composed of the probe 45, a rotation restricting member 46, and a connecting member 47. The unit 38 is made of, for example, metal such as Hastelloy. Alternatively, the unit 38 may be made of, for example, a resin such as a polyolefin-based resin. In a case of being made of a resin, the unit 38 may be a single-use type.

The probe 45 is a cylindrical member having a diameter that matches a diameter of the fitting hole 40. The probe 45 is inserted into the attachment hole 37 and fitted to the fitting hole 40 by an operator of the measurement system 2. As a result, the probe 45 is disposed in the flow cell 10. The probe 45 can be rotated by 360° in a circumferential direction in a state in which the rotation restricting member 46 is not attached to the attachment hole 37, but is simply inserted into the attachment hole 37 and fitted to the fitting hole 40. Here, the term "match" means match including an error that is generally allowed in the technical field to which the technology of the present disclosure belongs and does not deviate from the gist of the technology of the present disclosure, in addition to perfect match. The error referred to herein is preferably ±10% and more preferably ±5%.

The probe 45 has a main body portion 48 and the distal end portion 49. The main body portion 48 has a linear and circular optical path 50 at an inner center. The excitation light EL and the Raman scattered light RSL pass through the optical path 50. The excitation light EL passes through the optical path 50 from the measurement head 25 and the main body portion 48 toward the distal end portion 49. On the contrary, the Raman scattered light RSL passes through the optical path 50 from the distal end portion 49 toward the main body portion 48 and the measurement head 25.

A groove 51 recessed in a radial direction is formed on an outer peripheral surface of an upper portion of the main body portion 48 over the entire circumference. A distal end of a bolt 53 is pressed against a bottom surface 52 of the groove 51 (see FIG. 5).

In addition, a flange portion 54 that protrudes in the radial direction is formed on an outer peripheral surface of a central portion of the main body portion 48 over the entire circumference. In a case in which the probe 45 is inserted into the attachment hole 37 and fitted to the fitting hole 40, the flange portion 54 is in contact with a bottom surface 55 (see FIGS. 4 and 5) of the attachment hole 37 with a lower surface of the flange portion 54. That is, the flange portion 54 functions as a stopper that prevents the main body portion 48 of the probe 45 located above the flange portion 54 from passing below the bottom surface 55.

A circular groove 56 (see FIGS. 4 and 5) is formed on a lower surface of the flange portion 54. An O-ring 57 is fitted into the groove 56. The O-ring 57 is rubber having elasticity. The O-ring 57 is crushed between the bottom surface 55 of the attachment hole 37 and the groove 56 to prevent the culture supernatant 15A flowing in the flow path 30 from leaking to the outside. Although not shown, the O-ring for preventing the leakage of the culture supernatant 15A is also arranged between the main body portion 48 and the distal end portion 49.

An optical system 60 is built in a lower portion of the main body portion 48. The optical system 60 is disposed at a position where an optical axis OA1 (see FIGS. 4 and 5) of the optical system 60 coincides with a center of the optical path 50.

The optical system 60 is composed of a hemispherical lens 61 and a transparent plate 62. The hemispherical lens 61 is a lens having a hemispherical shape, and is made of, for example, sapphire glass or quartz glass. The hemispherical lens 61 has a hemispherical incidence surface of the excitation light EL and a planar emission surface of the excitation light EL.

The transparent plate 62 is a circular plate having incidence and emission surfaces 63 (see FIGS. 4 and 5) of the excitation light EL that are parallel to each other, and is made of, for example, sapphire glass or quartz glass. Here, the term "parallel" refers to parallel in a meaning including an error that is generally allowed in the technical field to which the present disclosed technology belongs and that does not contradict the gist of the present disclosed technology, in addition to completely parallel. The error referred to herein is preferably ±10% and more preferably ±5%.

Curvatures of the emission surface of the hemispherical lens 61 and the incidence surface of the transparent plate 62 are the same (in this case, 0). The emission surface of the hemispherical lens 61 and the incidence surface of the transparent plate 62 may be fixedly bonded to each other by an adhesive or the like, or may be simply held at the distal end portion 49 in a state in which the surfaces are simply joined to each other without using an adhesive or the like. Here, "the same" refers to the same in the sense of including an error generally allowed in the technical field to which the technology of the present disclosure belongs, which is the error to the extent that it does not contradict the purpose of the technology of the present disclosure, in addition to the exact same. The error referred to herein is preferably ±10% and more preferably ±5%.

The distal end portion 49 protrudes from the fitting hole 40 into the flow path 30. Therefore, when viewed from the flow path 30 on the upstream side of the fitting hole 40, the fitting hole 40 is a contracted flow portion. The portion of the fitting hole 40 is an example of a "portion where the distal end portion protrudes" according to the disclosed technology.

The distal end portion 49 has a cylindrical container shape in which an upper side connected to the main body portion 48 is open, a lower side is closed by a planar bottom plate 64 (see FIGS. 4 and 5), and a periphery is closed by a peripheral plate erected from the bottom plate 64 to the upper side. An inflow port 65 and an outflow port 66 of the culture supernatant 15A are formed at positions that are 180° symmetrically with respect to a center portion of the peripheral plate. The inflow port 65 and the outflow port 66 have a rectangular shape, more accurately, a square shape, and are surrounded by a wall surface. A flow path 67 (see FIGS. 4 and 5) through which the culture supernatant 15A flows is configured by the inflow port 65 and the outflow port 66 and a space formed by the bottom plate 64 and the peripheral plate. A direction parallel to the flow path 67 from the inflow port 65 toward the outflow port 66 is a flow direction FD2 of the culture supernatant 15A of the flow path 67. The flow path 67 is an example of a "flow path" and a "second flow path" according to the disclosed technology. In addition, the flow direction FD2 is an example of a "flow direction of a fluid in a second flow path" according to the disclosed technology.

The attachment hole 37 is formed at a depth at which the center of the flow path 30 coincides with the center of the flow path 67 in a case in which the flange portion 54 is in contact with the bottom surface 55 of the attachment hole 37. Then, the probe 45 is rotated about the optical axis OA1 by the operator in a state in which the rotation restricting member 46 is not attached to the attachment hole 37, and is aligned in a direction in which the flow direction FD2 coincides with the flow direction FD1. In this way, since the centers of the flow path 30 coincides with the flow path 67 and the flow direction FD1 coincides with the flow direction FD2, a line L1 connecting the center of the inflow port 33 and the center of the outflow port 34 of the flow path 30 coincides with a line L2 connecting the center of the inflow port 65 and the center of the outflow port 66 of the flow path 67 (see FIG. 5). Here, the term "coincide" refers to, in addition to complete coincidence, coincidence in the sense of including error that is error generally allowed in the technical field to which the disclosed technology belongs and that is of a degree not contradicting the gist of the disclosed technology. The error referred to herein is preferably ±10% and more preferably ±5%. More specifically, the term "coincide" as used with respect to the line L1 and the line L2 refers to a concept that allows, for example, an angular deviation of ±3°. The centers of the flow path 30 and the flow path 67 do not necessarily have to coincide with each other.

The rotation restricting member 46 has a large-diameter portion 70 on the proximal end side and a small-diameter portion 71 on the distal end side. A circular insertion hole 72 is formed at an inner center of the rotation restricting member 46. The insertion hole 72 has a diameter that is slightly larger than a diameter of the probe 45. Then, the insertion hole 72 has a diameter that is slightly smaller at a boundary portion between the large-diameter portion 70 and the small-diameter portion 71. The probe 45 is inserted into the insertion hole 72. Therefore, the probe 45 is an inner cylinder, and the rotation restricting member 46 is an outer cylinder.

A screw 73 is cut in the small-diameter portion 71. The screw 73 is screwed into the screw 39 of the attachment hole 37. The rotation restricting member 46 is attachably and detachably attached to the flow cell 10 by the screws 39 and 73.

In a case in which the rotation restricting member 46 is attached to the flow cell 10 via the attachment hole 37, a distal end portion 74 (see FIGS. 4 and 5) of the small-diameter portion 71 of the rotation restricting member 46 is pressed against the flange portion 54 (see FIG. 5). The flange portion 54 is sandwiched between the bottom surface 55 of the attachment hole 37 and the distal end portion 74 of the small-diameter portion 71 of the rotation restricting member 46. As a result, the rotation restricting member 46 restricts the rotation of the probe 45 about the optical axis OA1.

An insertion hole 75 is formed at a position of the large-diameter portion 70 corresponding to the groove 51 of the probe 45. A diameter of the insertion hole 75 is larger than a diameter of the bolt 53. The bolt 53 is inserted into the insertion hole 75.

The connecting member 47 has a large-diameter portion 80, a middle-diameter portion 81, and a small-diameter portion 82 in this order from the proximal end side. A diameter of the large-diameter portion 80 is larger than a diameter of the insertion hole 72 in the large-diameter portion 70 of the rotation restricting member 46. A diameter of the middle-diameter portion 81 is slightly smaller than a diameter of the insertion hole 72 in the large-diameter portion 70 of the rotation restricting member 46. In addition, a diameter of the small-diameter portion 82 is slightly smaller than a diameter of the insertion hole 72 that is slightly smaller at the boundary portion between the large-diameter portion 70 and the small-diameter portion 71. Therefore, the connecting member 47 is inserted into a space between the probe 45 and the rotation restricting member 46 in a state in which there is a slight backlash with the rotation restricting member 46. In a case in which the connecting member 47 is inserted into the space between the probe 45 and the rotation restricting member 46, in the radial direction, the middle-diameter portion 81 faces the large-diameter portion 70 of the rotation restricting member 46, and the small-diameter portion 82 faces the small-diameter portion 71 of the rotation restricting member 46.

A circular attachment hole 83 is formed at an inner center of the connecting member 47. A screw 84 is cut on an inner wall surface of the attachment hole 83. The attachment hole 83 is connected to a fitting hole 85 (see FIGS. 4 and 5). The fitting hole 85 is also a circular hole, the center of the fitting hole 85 coincides with the attachment hole 83. The fitting hole 85 has a diameter that is slightly smaller than the attachment hole 83.

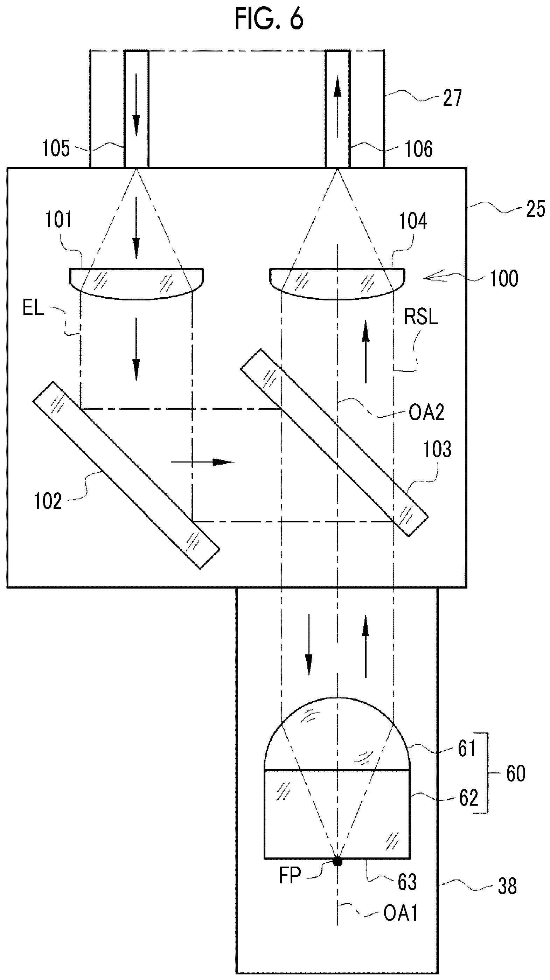

A diameter of the fitting hole 85 matches a diameter of the probe 45, and the probe 45 is fitted to the fitting hole 85. More specifically, a diameter of the probe 45 and the fitting hole 85 is, for example, 12.1 mm (φ12.1). Then, a fit tolerance of the probe 45 is, for example, H7 (0 to +18 μm), and a fit tolerance of the fitting hole 85 is, for example, G6 (+6 μm to +17 μm). By fitting the probe 45 to the fitting hole 85, in other words, by fitting the probe 45 to the connecting member 47, the optical axis OA1 of the optical system 60 is aligned with optical axis OA2 (see FIG. 6) of an optical system 100 built in the measurement head 25.

A screw hole 86 is formed at a position of the middle-diameter portion 81 corresponding to the groove 51 of the probe 45 and the insertion hole 75 of the rotation restricting member 46. The screw hole 86 is a through-hole, and in a case in which the probe 45 is fitted to the connecting member 47, the screw hole 86 faces the bottom surface 52 of the groove 51 of the probe 45. A screw 87 cut on a distal end portion of the bolt 53 is screwed into the screw hole 86. A hexagonal hole for inserting a hexagonal wrench is formed in a head of the bolt 53. After the probe 45 is fitted to the connecting member 47, the bolt 53 is inserted into the insertion hole 75 and the screw 87 is screwed into the screw hole 86 by the operator. In this case, the distal end of the bolt 53 is pressed against the bottom surface 52 of the groove 51 of the probe 45, so that the probe 45 and the connecting member 47 are fixed. The bolt 53 may be made of metal or a resin.

The fitting hole 85 has a length substantially the same as a length of the main body portion 48 of the probe 45 on an upper side of the flange portion 54. Then, in a case in which the connecting member 47 is inserted into the space between the probe 45 and the rotation restricting member 46 and the probe 45 is fitted to the connecting member 47, a distal end portion of the middle-diameter portion 81 is in contact with a bottom surface of the insertion hole 72 in the large-diameter portion 70 of the rotation restricting member 46. In addition, the distal end portion of the small-diameter portion 71 is in contact with an upper surface of the flange portion 54.

The measurement head 25 has a linear and circular optical path 90 at an inner center. The excitation light EL and the Raman scattered light RSL pass through the optical path 90 as in the optical path 50 of the probe 45. A center of the optical path 90 coincides with the optical axis OA2 of the optical system 100 built in the measurement head 25.

The measurement head 25 includes a main body portion 91 and a distal end portion 92. A diameter of the distal end portion 92 is smaller than a diameter of the main body portion 91. A diameter of the distal end portion 92 matches a diameter of the attachment hole 83 of the connecting member 47. A screw 93 is cut in the distal end portion 92. The screw 93 is screwed into the screw 84 of the attachment hole 83 of the connecting member 47. The connecting member 47 and the unit 38 are attachably and detachably attached to the measurement head 25 by the screws 84 and 93.

As shown in FIG. 6 as an example, the optical system 100 is built in the measurement head 25. The optical system 100 includes a collimating lens 101, a mirror 102, a dichroic filter 103, and a condenser lens 104.

The collimating lens 101 is provided at a position facing an excitation light optical fiber 105 installed in the cable 27. The excitation light EL guided from the analyzer 26 by the excitation light optical fiber 105 is incident on the collimating lens 101. The collimating lens 101 converts the excitation light EL into parallel light and emits the parallel light to the mirror 102. The mirror 102 reflects the excitation light EL, which is parallel light, toward the dichroic filter 103.

The dichroic filter 103 reflects the excitation light EL from the mirror 102 toward the optical system 60 of the probe 45. The excitation light EL transmits through the optical system 60 and is condensed at a focusing position FP. A focal length is determined by a diameter and a refractive index of the hemispherical lens 61, and the focusing position FP is determined by the focal length. In this case, the focusing position FP has a dot shape. The focusing position FP is located between the emission surface 63 of the transparent plate 62 and an inner wall surface of the bottom plate 64 of the distal end portion 49. Ideally, the focusing position FP coincides with a point at which the optical axis OA1 intersects the emission surface 63 of the transparent plate 62. That is, the focusing position FP is located on the emission surface 63 of the transparent plate 62.

The dichroic filter 103 transmits the Raman scattered light RSL taken in by the optical system 60 and emits the Raman scattered light RSL to the condenser lens 104. The condenser lens 104 is provided at a position facing a Raman scattered light optical fiber 106 installed in the cable 27. The condenser lens 104 condenses the Raman scattered light RSL from the dichroic filter 103 into the Raman scattered light optical fiber 106. The optical axis OA2 of the optical system 100 is a line passing through the center of the dichroic filter 103 and the condenser lens 104.

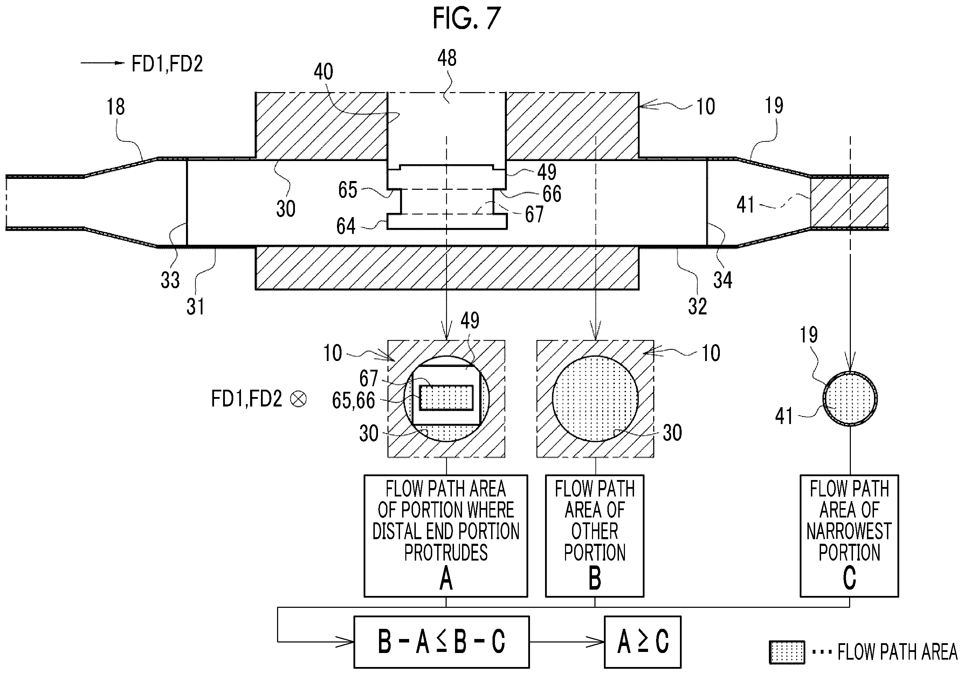

FIG. 7 shows a cross-sectional view of a lower portion of the flow cell 10, and cross-sectional views of a portion of the fitting hole 40 that is a portion where the distal end portion 49 protrudes, a portion (hereinafter, referred to as other portions) on the downstream side of the distal end portion 49, and the narrowest portion 41 of the second sending-out channel 19, which are cut by a plane orthogonal to the flow direction FD1. In the portion of the fitting hole 40, the flow path through which the culture supernatant 15A flows is present on an inner side and an outer side of the distal end portion 49. In other words, the culture supernatant liquid 15A flows through the inner side and the outer side of the distal end portion 49. The flow path on the inner side of the distal end portion 49 is the second flow path 67. The flow path on the outer side of the distal end portion 49 is defined by the inner wall surface of the flow path 30 of the flow cell 10 and the outer wall surface of the distal end portion 49. An area of the flow path of the culture supernatant 15A in the portion of the fitting hole 40 as viewed in the flow direction FD1 is denoted by A (in FIG. 7, denoted as "flow path area A of portion where distal end portion protrudes").

In the other portions, the flow path through which the culture supernatant 15A flows is the first flow path 30 itself. An area of the first flow path 30 as viewed in the flow direction FD1 is denoted by B (in FIG. 7, denoted as "flow path area B of other portions"). In addition, in the narrowest portion 41, the flow path through which the culture supernatant 15A flows is the second sending-out channel 19 itself. An area of the second sending-out channel 19 as viewed in the flow direction FD1 of the narrowest portion 41 is denoted by C (in FIG. 7, denoted as "flow path area C of narrowest portion").

Similar to in the portion of the fitting hole 40 when viewed from the flow path 30 on the upstream side of the distal end portion 49, the narrowest portion 41 is a contracted flow portion when viewed from the flow path 30 on the downstream side of the fitting hole 40. The area B of the flow path 30 of the flow cell 10 and the area C of the narrowest portion 41 are set in advance such that a difference B - C is a value at which damage to the antibody 17 or the like due to vortices generated in the narrowest portion 41 is within an acceptable range. Therefore, in the portion of the fitting hole 40, a condition in which the damage to the antibody 17 or the like due to the vortices is within the acceptable range is represented by Expression (1), as in the narrowest portion 41.

$$B - A \leq B - C \ ... \ (1)$$

When Expression (1) is rearranged, the condition in which the damage to the antibody 17 or the like due to the vortices in the portion of the fitting hole 40 is within the acceptable range is represented by Expression (2).

$$A \geq C \ ... \ (2)$$

That is, in order for the damage to the antibody 17 or the like due to the vortices to be within the acceptable range in the portion of the fitting hole 40, the distal end portion 49 need only have a configuration in which the area A of the flow path of the portion of the fitting hole 40 as viewed in the flow direction FD1 is equal to or greater than the area C of the narrowest portion 41.

Next, the effects obtained from the above-described configuration will be described. First, the operator inserts the probe 45 into the attachment hole 37 of the flow cell 10 and fits the probe 45 to the fitting hole 40 to dispose the probe 45 in the flow cell 10. The lower surface of the flange portion 54 of the probe 45 is in contact with the bottom surface 55 of the attachment hole 37. As a result, the centers of the flow path 30 and the flow path 67 coincide with each other.

Subsequently, the operator rotates the probe 45 about the optical axis OA1 and aligns the orientation of the probe 45 such that the flow direction FD2 of the culture supernatant 15A of the flow path 67 of the probe 45 coincides with the flow direction FD1 of the culture supernatant 15A of the flow path 30 of the flow cell 10. By performing these procedures, the line L1 connecting the center of the inflow port 33 and the center of the outflow port 34 of the flow path 30 coincides with the line L2 connecting the center of the inflow port 65 and the center of the outflow port 66 of the flow path 67.

Next, the operator screws the screw 73 of the small-diameter portion 71 of the rotation restricting member 46 into the screw 39 of the attachment hole 37 of the flow cell 10 to attach the rotation restricting member 46 to the attachment hole 37. In this case, the distal end portion 74 of the small-diameter portion 71 of the rotation restricting member 46 is pressed against the flange portion 54 of the probe 45, so that the rotation of the probe 45 about the optical axis OA1 is restricted.

In a case in which the rotation restricting member 46 is mounted on the flow cell 10, a space is formed between the probe 45 and the rotation restricting member 46. The operator inserts the connecting member 47 into this space. As a result, the main body portion 48 of the probe 45 on the upper side of the flange portion 54 is fitted to the fitting hole 85 of the connecting member 47. In this way, by fitting the probe 45 to the connecting member 47, the optical axis OA1 of the optical system 60 and the optical axis OA2 of the optical system 100 are aligned.

The operator inserts the bolt 53 into the insertion hole 75 of the rotation restricting member 46. In addition, the screw 87 of the bolt 53 is screwed into the screw hole 86 of the connecting member 47. In this case, the distal end of the bolt 53 is pressed against the bottom surface 52 of the groove 51 of the probe 45, so that the probe 45 and the connecting member 47 are fixed.

Finally, the operator screws the screw 93 of the distal end portion 92 of the measurement head 25 into the screw 84 of the attachment hole 83 of the connecting member 47 to mount the measurement head 25 on the connecting member 47. In addition, the first sending-out channel 18 and the first connection portion 31 and the second sending-out channel 19 and the second connection portion 32 are connected to each other. As a result, the measurement system 2 consisting of the flow cell 10 and the Raman spectrometer 11 is incorporated into the cell culture unit 12. Before the connecting member 47 is inserted into the space between the probe 45 and the rotation restricting member 46, the measurement head 25 may be mounted on the connecting member 47. In addition, before the probe 45 is disposed in the flow cell 10, the first sending-out channel 18 and the first connection portion 31 and the second sending-out channel 19 and the second connection portion 32 may be connected to each other.

The culture supernatant liquid 15A obtained from the culture tank 13 in which the antibody-producing cell 16 is cultured is flowed into the flow path 30 of the flow cell 10. The culture supernatant 15A flows into the flow path 67 from the inflow port 65 and flows out of the flow path 67 from the outflow port 66.

The distal end portion 49 has a configuration in which the area A of the flow path of the portion of the fitting hole 40 as viewed in the flow direction FD1 through which the culture supernatant 15A flows is equal to or greater than the area C of the flow path of the narrowest portion 41 where the area is narrowed most as viewed in the flow direction FD1 in the flow path through which the culture supernatant 15A flows on the downstream side of the distal end portion 49. Therefore, it is possible to limit the damage to the antibody 17 or the like due to the vortices in the portion of the fitting hole 40 to the acceptable range.

In the distal end portion 49, the culture supernatant 15A is irradiated with the excitation light EL that has passed through the excitation light optical fiber 105, the optical system 100, the optical path 90, the optical path 50, and the optical system 60. The excitation light EL is focused at the focusing position FP by the optical system 60.

The Raman scattered light RSL is generated by the interaction between the excitation light EL and the antibody 17 or the like in the culture supernatant liquid 15A. The Raman scattered light RSL is captured by the optical system 60, and is output to the analyzer 26 through the optical path 50, the optical path 90, the optical system 100, and the Raman scattered light optical fiber 106. The Raman scattered light RSL is converted into the Raman spectral data 28 by the analyzer 26.

As shown in FIG. 3 and the like, the narrowest portion 41 is present in the second sending-out channel 19. In other words, the narrowest portion 41 is not present in the flow path 30 of the flow cell 10. Therefore, it is possible to reduce the possibility that vortices are generated in the flow path 30 of the flow cell 10 other than the portion of the fitting hole 40.

As shown in FIG. 3 and the like, the flow path 67 through which the culture supernatant 15A flows is formed in the distal end portion 49. Therefore, the Raman spectral data 28 of the culture supernatant 15A can be measured in the distal end portion 49. In addition, the flow of the culture supernatant liquid 15A in the flow cell 10 is not hindered by the distal end portion 49.

As shown in FIG. 5, the flow direction FD2 of the culture supernatant 15A of the flow path 67 of the probe 45 coincides with the flow direction FD1 of the culture supernatant 15A of the flow path 30 of the flow cell 10. Therefore, the culture supernatant 15A smoothly flows through the flow path 30 and the flow path 67 without causing a pressure loss, and the damage to the antibody 17 or the like in the culture supernatant 15A is reduced.

As shown in FIG. 3 and the like, the flow path 67 has the inflow port 65 and the outflow port 66 of the culture supernatant 15A that are surrounded by a wall surface. Therefore, the flow of the culture supernatant 15A near the focusing position FP of the excitation light EL can be stabilized. The bias of the component in the culture supernatant liquid 15A in the vicinity of the focusing position FP is reduced, and the measurement stability of the Raman spectral data 28 can be improved.

The Raman scattered light RSL is likely to reflect information derived from a functional group of an amino acid of a protein. Therefore, by using the physical property data as the Raman spectral data 28 as in the present example, it is possible to acquire the physical property data that clearly reflects the physical property such as the concentration of the antibody 17 which is a protein.

The biopharmaceutical including the antibody 17, which is the cell product, is called an antibody drug and is widely used not only for the treatment of chronic diseases, such as cancer, diabetes, and rheumatoid arthritis, but also for the treatment of rare diseases, such as hemophilia and a Crohn's disease. For this reason, according to this example in which the culture supernatant liquid 15A, which is obtained from the culture tank 13 in which the antibody-producing cell 16 is cultured and serves as a source of the antibody drug, is used as the fluid, it is possible to promote the development of the antibody drug that is widely used for the treatment of various diseases.

The narrowest portion 41 may be present in the flow path 30 of the flow cell 10.

The connecting member 47 may be attached to the measurement head 25 in a non-attachable and detachable manner. That is, the measurement head 25 and the connecting member 47 may be integrated. In addition, the measurement head 25 and the probe 45 may be integrated.

A method of restricting the rotation of the probe 45 about the optical axis OA1 is not limited to the example method of pressing the distal end portion 74 of the rotation restricting member 46 against the flange portion 54 of the probe 45. For example, a method of fitting a protrusion formed in the distal end portion 74 of the rotation restricting member 46 to two or more fitting holes formed in the flange portion 54 may be used. In addition, a method of fixing the probe 45 and the connecting member 47 is not limited to a method of pressing the distal end of the bolt 53 against the bottom surface 52 of the groove 51 of the probe 45. A method of using a stopper having a distal end portion that can be pressed in by spring biasing may be used.

Although the flow cell 10 and the rotation restricting member 46 are connected to each other, the measurement head 25 and the connecting member 47 are connected to each other, and the like by screwing, the present disclosure is not limited thereto. A connection by a plate spring-like claw that is hooked on a lower edge of the hole may be used.

The flow path 67 of the probe 45 is not limited to the example having the inflow port 65 and the outflow port 66 surrounded by the wall surface. A probe having a distal end portion having a cross-sectional L-shape shown in FIGS. 13 and 19 of JP2021-048872A may be used. In addition, the probe 45 may not include the flow path 67. For example, as in the aspect described in JP2020-511635A, a portion of the optical system 60 may protrude into the flow path 30. In short, the probe may be disposed in a state in which the distal end portion 49 protrudes into the flow path 30.

The inflow port 65 and the outflow port 66 are not limited to the rectangular shape, and may have a circular shape, an elliptical shape, or the like. In addition, the distal end portion 49 is not limited to the example of the cylindrical container shape. A square tubular container shape, a hexagonal tubular container shape, or the like may be used. Therefore, the bottom plate 64 is not limited to the circular shape shown in the example, and may have a rectangular shape, a hexagonal shape, or the like. In addition, the peripheral plate is not limited to the curved surface shown in the example, and may be a flat surface.

The bottom plate 64 and the inner wall surface of the bottom plate 64 may be a convex curved surface on the lower side conforming to the shape of the flow path 30 of the flow cell 10. In a case in which the inner wall surface is a convex curved surface on the lower side, the inner wall surface functions as a reflecting surface that directs the Raman scattered light RSL to the optical system 60. Therefore, it is possible to further increase the S/N ratio of the Raman spectral data 28. It should be noted that the curved surface that protrudes to the lower side may have a parabolic antenna shape.

The lens constituting the optical system 60 is not limited to the example of the hemispherical lens 61. A ball lens, a plano-convex lens, a biconvex lens, a cylindrical lens, and the like may be used. In addition, the transparent plate is not limited to the example of the circular transparent plate 62 having the incidence and emission surfaces 63 that are parallel to each other. A transparent plate having an incidence surface having a shape following a shape of an emission surface, such as a ball lens, a plano-convex lens, and a biconvex lens, and a planar emission surface may be used.

The optical system 60 may be integrally formed by forming the lens and the transparent plate as one lens, instead of constituting the optical system 60 by bonding the lens and the transparent plate. In addition, the optical system 60 may be configured of only the lens without the transparent plate.

The first connection portion 31 and the second connection portion 32 may be disposed on the lower surface of the flow cell 10, and the flow path 30 may be U-shaped. The shape of the flow cell 10 is not limited to the rectangular parallelepiped shape, and may be a cylindrical shape or a square cylindrical shape. The cross-sectional shape of the flow path 30 is also not limited to the circular shape, and may be an elliptical shape or a rectangular shape. In a case in which the flow path 30 has a rectangular shape, the shape of the flow path 30 as viewed in the flow direction FD1 may be a shape in which the distal end portion 49 fits substantially without a gap, and the size of the inflow port 65 and the outflow port 66 may be made as large as possible such that the area of the flow path 30 as viewed in the flow direction FD1 and the area of the flow path 67 are substantially the same (B ≈ A). In addition, the flow cell 10, the unit 38, and the like may be formed of a composite material such as carbon fiber reinforced resin.

The measurement target substance is not limited to the antibody 17 or the like. The measurement target substance may be protein, peptide, nucleic acid (DNA or ribonucleic acid (RNA)), lipid, a virus, a virus subunit, a virus-like portionicle, and the like other than the antibody 17.

The cell product is not limited to the antibody 17 or the like. Examples of the cell product include cytokine (interferon, interleukin, or the like), hormone (insulin, glucagon, follicle-stimulating hormone, erythropoietin, or the like), a growth factor (insulin-like growth factor (IGF)-1, basic fibroblast growth factor (bFGF), or the like), a blood coagulation factor (seventh factor, eighth factor, ninth factor, or the like), an enzyme (lysosomal enzyme, deoxyribonucleic acid (DNA) degrading enzyme, or the like), a fragment crystallizable (Fc) fusion protein, a receptor, albumin, and a protein vaccine. Examples of the antibody 17 include a bispecific antibody, an antibody-drug conjugate, a low-molecular-weight antibody, and a sugar-chain-modified antibody.

The physical property data is not limited to the Raman spectral data 28. The physical property data may be infrared absorption spectrum data, near infrared absorption spectrum data, nuclear magnetic resonance spectrum data, ultraviolet visible absorption spectroscopy (UV-Vis) spectrum data, or fluorescence spectrum data.

The fluid is not limited to the culture supernatant liquid 15A. The cell culture liquid 15 before being decellularized by the cell removal filter 14 may be used. A cell culture liquid (so-called culture medium) that does not contain the cell product and that is not yet supplied to the culture tank 13 may be used. A purified liquid obtained by purifying the culture supernatant liquid 15A by using the chromatography device in the purification unit may be used. The fluid is not limited to a liquid related to the cell culture, and may be, for example, river water collected to investigate water pollution. A raw material (for example, polystyryllithium, a methanol aqueous solution, and the like) and/or a product (for example, a monomer or a polymer such as polystyrene) in a case in which a product, such as a monomer or a polymer (for example, polystyrene or the like), is continuously produced by flow synthesis may be used. The fluid is not limited to liquid, and may be gas.

It is possible to understand the technology according to the following supplementary notes, based on the above description.

[Appendix 1]

A probe that is mounted on a flow cell having a first flow path through which a fluid including a measurement target substance of physical property data of a spectroscopic analysis apparatus flows, the probe being disposed with a distal end portion protruding into the first flow path,

in which the distal end portion has a configuration in which an area of a flow path through which the fluid flows at a portion where the distal end portion protrudes, as viewed in a flow direction of the fluid, is equal to or greater than an area of a flow path at a narrowest portion in the flow path through which the fluid flows on a downstream side of the distal end portion, the narrowest portion being a portion in which an area is narrowed most as viewed in the flow direction of the fluid.

[Appendix 2]

The probe according to Appendix 1,

in which an inflow path through which the fluid flows from an outside into the first flow path and an outflow path through which the fluid flows from the first flow path to the outside are connected to the flow cell, and the narrowest portion is present in the outflow path.

[Appendix 3]

The probe according to Appendix 1 or 2, in which a second flow path through which the fluid flows is formed in the distal end portion.

[Appendix 4]

The probe according to Appendix 3, in which a flow direction of the fluid in the second flow path coincides with a flow direction of the fluid in the first flow path.

[Appendix 5]

The probe according to Appendix 3 or 4, in which the second flow path has an inflow port and an outflow port of the fluid that are surrounded by a wall surface.

[Appendix 6]

The probe according to any one of appendices 1 to 5, in which the physical property data is Raman spectral data.

[Appendix 7]

The probe according to any one of appendices 1 to 6, in which the fluid is any of a cell culture solution, a culture supernatant, a purified solution, and a culture medium.

The technology of the present disclosure can also be combined with various embodiments and/or various modification examples described above, as appropriate. Additionally, the technology of the present disclosure is not limited to each of the above-described embodiments, and various configurations can, of course, be employed without departing from the gist.

The above-described contents and the above-shown contents are the detailed description of the portions according to the technology of the present disclosure, and are merely an example of the technology of the present disclosure. For example, the above description of the configuration, the function, the operation, and the effect are the description of examples of the configuration, the function, the operation, and the effect of the portions according to the technology of the present disclosure. Accordingly, it goes without saying that unnecessary portions may be deleted, new elements may be added, or replacements may be made with respect to the above-described contents and the above-shown contents within a range that does not deviate from the gist of the technology of the present disclosure. In order to avoid complications and facilitate grasping the parts according to the technology of the present disclosure, in the above-described contents and the above-shown contents, the description of technical general knowledge and the like that do not particularly require description for enabling the implementation of the technology of the present disclosure are omitted.

In the present specification, "A and/or B" is synonymous with "at least one of A or B". That is, "A and/or B" means that it may be only A, only B, or a combination of A and B. Further, in the present specification, in a case where three or more items are expressed in combination using "and/or", the same concept as that of "A and/or B" applies.

All documents, patent applications, and technical standards described in the present specification are incorporated in the present specification by reference to the same extent as in a case where each of the documents, patent applications, technical standards are specifically and individually indicated to be incorporated by reference.

**Claims**

1. A probe that is mounted on a flow cell having a first flow path through which a fluid including a measurement target substance of physical property data of a spectroscopic analysis apparatus flows, the probe being disposed with a distal end portion protruding into the first flow path,
   in which the distal end portion has a configuration in which an area of a flow path through which the fluid flows at a portion where the distal end portion protrudes, as viewed in a flow direction of the fluid, is equal to or greater than an area of a flow path at a narrowest portion in the flow path through which the fluid flows on a downstream side of the distal end portion, the narrowest portion being a portion in which an area is narrowed most as viewed in the flow direction of the fluid.

2. The probe according to claim 1,

   wherein an inflow path through which the fluid flows from an outside into the first flow path and an outflow path through which the fluid flows from the first flow path to the outside are connected to the flow cell, and the narrowest portion is present in the outflow path.

3. The probe according to claim 1, wherein a second flow path through which the fluid flows is formed in the distal end portion.

**4.** The probe according to claim 3,
wherein a flow direction of the fluid in the second flow path coincides with a flow direction of the fluid in the first flow path.

**5.** The probe according to claim 3,
wherein the second flow path has an inflow port and an outflow port of the fluid that are surrounded by a wall surface.

**6.** The probe according to claim 1,
wherein the physical property data is Raman spectral data.

**7.** The probe according to claim 1,
wherein the fluid is any of a cell culture solution, a culture supernatant, a purified solution, and a culture medium.

FIG. 1

FIG. 2

EL

M

RSL

# FIG. 3

## FIG. 4

FIG. 5

# FIG. 6

# FIG. 7

FD1,FD2 →

FD1,FD2 ⊗

| FLOW PATH AREA OF PORTION WHERE DISTAL END PORTION PROTRUDES

A | FLOW PATH AREA OF OTHER PORTION

B | FLOW PATH AREA OF NARROWEST PORTION

C |

$$B - A \leqq B - C$$

$$A \geqq C$$

▦ ⋯ FLOW PATH AREA

EP 4 749 265 A1

## INTERNATIONAL SEARCH REPORT

| International application No. |
|---|
| **PCT/JP2024/033103** |

**A. CLASSIFICATION OF SUBJECT MATTER**

*G01N 21/05*(2006.01)i; *G01N 21/65*(2006.01)i
FI: G01N21/05; G01N21/65

According to International Patent Classification (IPC) or to both national classification and IPC

**B. FIELDS SEARCHED**

Minimum documentation searched (classification system followed by classification symbols)

G01N21/00-21/74; G01N15/00-15/1492; G01N22/00-22/04; G01N24/00-24/14; G01N27/00-27/10; G01N27/14-27/24; G01N29/00-29/52; G01N33/48-33/98; G01J3/00-3/52

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | WO 2012/161067 A1 (HORIBA, LTD.) 29 November 2012 (2012-11-29)<br>entire text, all drawings | 1-7 |
| A | US 2021/0223154 A1 (DONALDSON COMPANY, INC.) 22 July 2021 (2021-07-22)<br>entire text, all drawings | 1-7 |
| A | WO 2023/090015 A1 (FUJIFILM CORPORATION) 25 May 2023 (2023-05-25)<br>entire text, all drawings | 1-7 |
| A | WO 2023/053585 A1 (FUJIFILM CORPORATION) 06 April 2023 (2023-04-06)<br>entire text, all drawings | 1-7 |
| A | JP 2020-511635 A (MARQMETRIX INC.) 16 April 2020 (2020-04-16)<br>entire text, all drawings | 1-7 |

☐ Further documents are listed in the continuation of Box C.　　☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 November 2024** | **26 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
**Information on patent family members**

International application No.

**PCT/JP2024/033103**

| Patent document cited in search report | | | Publication date (day/month/year) | Patent family member(s) | | | Publication date (day/month/year) |
|---|---|---|---|---|---|---|---|
| WO | 2012/161067 | A1 | 29 November 2012 | US | 2014/0183380 | A1 | |
| | | | | EP | 2711688 | A1 | |
| | | | | CN | 103547910 | A | |
| | | | | CN | 107991250 | A | |
| US | 2021/0223154 | A1 | 22 July 2021 | WO | 2019/232305 | A1 | |
| | | | | EP | 3801902 | A1 | |
| | | | | CN | 112714672 | A | |
| | | | | BR | 112020024254 | A | |
| WO | 2023/090015 | A1 | 25 May 2023 | CN | 118284802 | A | |
| WO | 2023/053585 | A1 | 06 April 2023 | US | 2024/0232723 | A1 | |
| | | | | EP | 4390379 | A1 | |
| | | | | CN | 117980998 | A | |
| JP | 2020-511635 | A | 16 April 2020 | US | 2018/0246031 | A1 | |
| | | | | US | 2019/0178786 | A1 | |
| | | | | US | 2020/0393360 | A1 | |
| | | | | WO | 2018/160756 | A1 | |
| | | | | EP | 3589933 | A1 | |
| | | | | EP | 4293343 | A2 | |
| | | | | CA | 3054803 | A1 | |
| | | | | AU | 2018229343 | A1 | |
| | | | | SG | 11201907669U | A | |
| | | | | CN | 110366676 | A | |

Form PCT/ISA/210 (patent family annex) (July 2022)

**REFERENCES CITED IN THE DESCRIPTION**

**Patent documents cited in the description**

- JP 2020511635 A
- JP 2021048872 A